# EUROPÄISCHE PATENTSCHRIFT

(11) **EP 2 007 961 B1**
(45) Veröffentlichungstag und Bekanntmachung des Hinweises auf die Patenterteilung: **30.06.2010**
(21) Anmeldenummer: 07723961.4
(22) Anmeldetag: 04.04.2007
(51) Int. Cl.: E06B 3/663

(54) **ECKVERBINDER FÜR GLASSCHEIBEN-ABSTANDHALTER**
GLASS-PANE SPACER CORNER CONNECTOR
CONNECTEUR ANGULAIRE POUR ÉCARTEUR DE VITRE

(30) Priorität: 13.04.2006 DE 102006017821
(43) Veröffentlichungstag der Anmeldung: 31.12.2008
(73) Patentinhaber: S&T Components Gmbh&Co.Kg, 75196 Remchingen-Nöttingen (DE)
(72) Erfinder: STROHHEKER, Rolf, 75181 Pforzheim-Huchenfeld (DE)
(74) Vertreter: Lindner, Michael
(86) Internationale Anmeldenummer: PCT/EP2007/003020
(87) Internationale Veröffentlichungsnummer: WO 2007/118611

(56) Entgegenhaltungen:
- WO-A-00/05475
- DE-U1-202004 017 398
- FR-A1- 2 291 339

## Beschreibung

Die vorliegende Erfindung betrifft einen Eckverbinder für Glasscheiben-Abstandhalter mit einem ersten und einem zweiten Verbindungselement, auf die jeweils ein Abstandhalter aufsteckbar ist, und einem Eckelement, das die beiden Verbindungselemente winklig verbindet, wobei das Eckelement zwei Seitenflächen, die den Glasscheiben zugewandt sind, zwei Stirnflächen, die dem jeweiligen Abstandhalter zugewandt sind, und eine Außenfläche aufweist.

Allgemein sind derartige Eckverbinder bekannt. Beispielsweise ist in der Druckschrift DE 31 17 615 A1 ein Eckverbinder gezeigt, auf den Abstandhalter aufsteckbar sind.

Das Dokument DE 20 2004 017 398 U1 zeigt einen Eckverbinder nach dem Oberbegriff des Anspruchs 1.

Grundsätzlich werden derartige Abstandhalter dazu verwendet, zwei Glasscheiben, insbesondere Isolierglasscheiben auf Abstand zu halten und den zwischen den Scheiben entstehenden Raum nach außen abzudichten. D.h., dass eine Hauptfunktion der Abstandhalter darin besteht, eine luftundurchlässige, insbesondere wasserdampfundurchlässige Abdichtung zu schaffen. Diese Abdichtungsfunktion muss darüber hinaus auch bei großen Temperaturschwankungen bestehen bleiben. Geht die Dichtigkeit verloren, kann Feuchtigkeit in den Innenraum zwischen den Isolierglasscheiben gelangen, was zu einer Eintrübung der Scheibe führt.

Neben der in der oben genannten Druckschrift gezeigten Lösung mit Eckverbindern, werden die 90°-Winkel der Abstandhalter sehr häufig auch dadurch erzielt, dass die Abstandhalter umgebogen werden. Daraus kann sich jedoch eine Undichtigkeit ergeben, die später ebenfalls zu einer Eintrübung der Scheibe führen kann.

Die bisher zur Verfügung stehenden Lösungen haben entweder den Nachteil, dass Dichtigkeitsprobleme auftreten können oder sind - wie in dem oben genannten Stand der Technik - umständlich zu verarbeiten.

Vor diesem Hintergrund besteht eine der Aufgaben der vorliegenden Erfindung darin, einen Eckverbinder zu schaffen, der einerseits leicht verarbeitbar ist und andererseits die erforderliche Dichtigkeit erreicht.

Diese Aufgabe wird bei dem Eckverbinder der eingangs genannten Art dadurch gelöst, dass eine Metallfolie auf der Außenfläche sowie zumindest teilweise auf den Seitenflächen und an den Stirnflächen aufgebracht ist, und dass das im Bereich der Stirnflächen vorgesehene Butyl zwischen Metallfolie und eingestecktem Abstandhalter eine Abdichtung schafft.

Der erfindungsgemäße Eckverbinder besitzt den Vorteil, dass der Abstandhalter lediglich eingesteckt werden muss, wobei beim Einstecken gleichzeitig die Abdichtung über das vorgesehene Butyl erfolgt. Darüber hinaus wird durch die vorgesehene Folie einerseits erreicht, dass der Eckverbinder im Bereich des Eckelements wasserdampfundurchlässig ist und andererseits eine gute Verbindung zwischen Eckelement und Butyl erreicht wird.

Bei einer bevorzugten Weiterbildung ist am innenliegenden Bereich der Stirnflächen des Eckelements jeweils eine Anschlagfläche für den Abstandhalter vorgesehen, die derart ausgebildet ist, dass zwischen Stirnfläche und Abstandhalter im äußeren Bereich ein Spalt entsteht.

D.h. mit anderen Worten, dass der Abstandhalter im eingesteckten Zustand nicht vollflächig an der Stirnfläche des Eckelements anliegt. Vielmehr liegt der Abstandhalter nur im inneren Bereich des Eckelements an der Anschlagfläche an, so dass im außenliegenden Bereich des Eckelements ein Spalt zwischen Stirnfläche und Abstandhalter entsteht, in dem das Butyl liegt. Die Menge des Butyls wird dabei so gewählt, dass es bei eingestecktem Abstandhalter über den Spalt hinausgedrückt wird und damit eine sichere Abdichtung zwischen Stirnfläche und Abstandhalter erzielt.

Bei einer bevorzugten Weiterbildung sind die Verbindungselemente und das Eckelement einstückig ausgebildet. Vorzugsweise ist der Eckverbinder aus Kunststoff gefertigt.

Selbstverständlich kann der Eckverbinder auch aus anderen Materialien gefertigt sein. Kunststoff hat sich jedoch als besonders vorteilhaft herausgestellt. Sollte der Eckverbinder bspw. aus Metall gefertigt sein, kann auf eine separate Metallfolie verzichtet werden, da sie sozusagen bereits integraler Bestandteil des Eckverbinders ist.

Bei einer bevorzugten Weiterbildung ist die Folie auf dem Eckelement aufgeklebt.

Diese Maßnahme hat den Vorteil, dass das Aufbringen sehr einfach ist. Selbstverständlich kann die Folie auch auf andere Art und Weise am Eckelement befestigt werden. Die Art und Weise der Befestigung richtet sich hauptsächlich nach der Dicke der eingesetzten Folie. Bei Foliendicken im µ-Bereich hat sich das Kleben als vorteilhaft herausgestellt. Dickere Folien könnten dagegen auch anders aufgebracht werden.

Bei eine bevorzugten Weiterbildung weisen die Verbindungselemente jeweils zumindest ein Halteelement auf, um den eingesteckten Abstandhalter zu halten. Vorzugsweise sind die Halteelemente als Rastelemente ausgebildet.

D.h. mit anderen Worten, dass der Abstandhalter beim Erreichen seiner Endposition auf dem Verbindungselement verriegelt wird, so dass er nicht mehr vom Eckverbinder getrennt werden kann.

Selbstverständlich sind auch lösbare Verbindungen denkbar.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand einer Ausführungsform unter Bezugnahme auf die Zeichnung näher erläutert. Dabei zeigen:
- Fig. 1: eine Darstellung des erfindungsgemäßen Eckverbinders aus drei An- sichten;
- Fig. 2: eine Schnittdarstellung eines Abstandhalters;
- Fig. 3: eine Seitenansicht des erfindungsgemäßen Eckverbinders mit teilweise aufgestecktem Abstandhalter; und
- Fig. 4: eine Seitenansicht des erfindungsgemäßen Eckverbinders mit vollstän- dig aufgestecktem Abstandhalter.

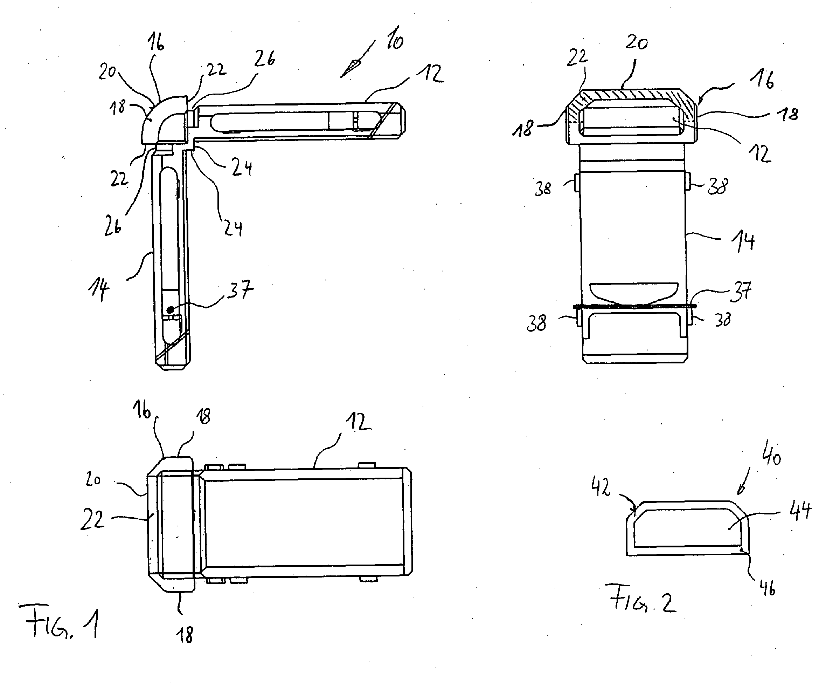

In Fig. 1 ist ein Eckverbinder in drei unterschiedlichen Ansichten dargestellt und allgemein mit dem Bezugszeichen 10 gekennzeichnet. Der Eckverbinder ist einstückig aus einem Kunststoffmaterial gefertigt, wobei selbstverständlich auch andere Materialien verwendbar sind. Darüber hinaus könnte der Eckverbinder auch aus mehreren Einzelteilen zusammengesetzt sein.

Der Eckverbinder 10 weist zwei Verbindungselemente 12, 14 auf, die über ein Eckelement 16 in einem 90°-Winkel miteinander verbunden sind. Die beiden Verbiridungselemente 12, 14 liegen zudem in einer Ebene.

Die beiden Verbindungselemente 12, 14 sind vorzugsweise gleich ausgebildet und haben eine Querschnittsform, die an die Form des Abstandhalters, wie er beispielsweise in Fig. 2 gezeigt ist, angepasst ist. Insbesondere ist der Querschnitt der Verbindungselemente 12, 14 so ausgebildet, dass der in Fig. 2 mit dem Bezugszeichen 40 gekennzeichnete Abstandhalter aufgesteckt werden kann. Die Verbindungselemente 12, 14 ragen dann jeweils in einen Hohlraum 44 des Abstandhalters 40 hinein.

Das Eckelement 16 des Eckverbinders 10 weist eine kreisbogenförmige Außenfläche 20 auf, die sich von einer ersten Stirnfläche 22 um 90° zu einer zweiten Stirnfläche 22 des Eckelements erstreckt. Die Außenfläche 20 liegt in dem gezeigten Beispiel senkrecht zur Zeichenebene.

Das Eckelement 16 weist zwei Seitenflächen 18 auf, die sich von der Außenfläche 20 nach innen erstrecken. In der rechten Darstellung in Fig. 1 ist zu erkennen, dass die Seitenflächen 18 aus zwei Abschnitten bestehen, wobei der äußere Abschnitt schräg zur Außenfläche 20 und der innere Abschnitt senkrecht zur Außenfläche 20 verläuft.

Schließlich weist das Eckelement 16 zwei Stirnflächen 22 auf, die sich jeweils senkrecht von der Außenfläche 16 nach innen erstrecken und den Verbindungselementen 12 bzw. 14 zugewandt sind.

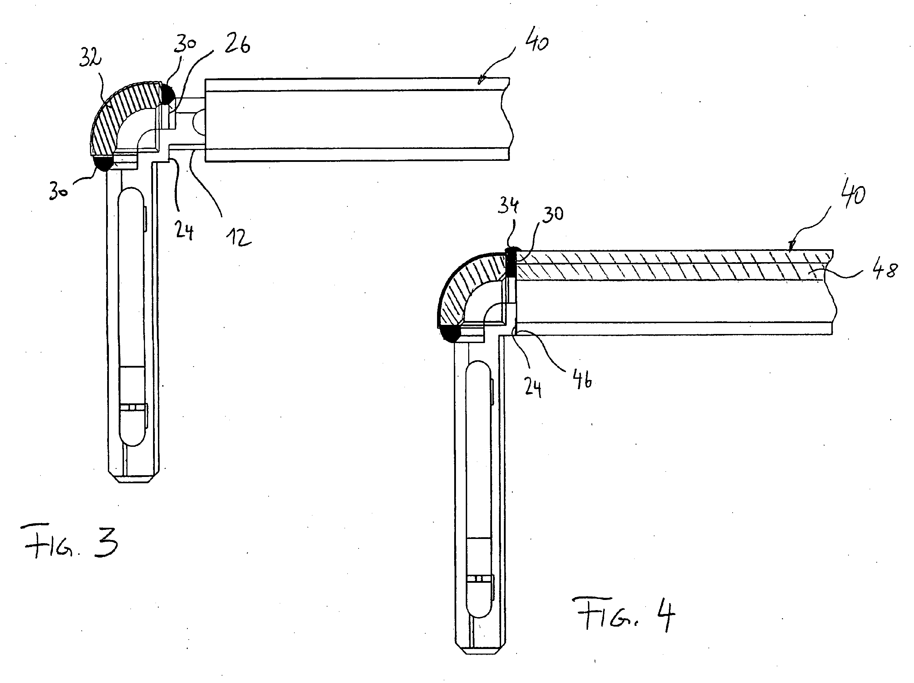

Die Fig. 1 lässt im Bereich des Eckelements 16 noch zwei Anschlagflächen 24 erkennen, die im inneren Bereich des Eckelements liegen und jeweils ebenfalls den Verbindungselementen 12 bzw. 14 zugewandt sind. D.h. mit anderen Worten, dass die Anschlagflächen 24 parallel sind zu der jeweiligen Stirnfläche 22. Allerdings sind die Anschlagflächen 24 jeweils beabstandet zu der Stirnfläche 22, so dass beim Einschieben eines Abstandhalters 40 auf das jeweilige Verbindungselement 12, 14 eine Stirnfläche 46 des Abstandhalters zuerst an der Anschlagfläche 24 anschlägt, so dass die Stirnfläche 46 des Abstandhalters einen bestimmten Abstand zu der Stirnfläche 22 besitzt. Die Funktion dieses Abstands wird später mit Bezug auf die Fig. 3 und 4 noch erläutert werden.

Schließlich ist in Fig. 1 noch zu erkennen, dass im Bereich der Stirnflächen 22 jeweils eine Nut 26 im jeweiligen Verbindungselement 12 bzw. 14 vorgesehen ist. Diese Nut 26 erstreckt sich von einer Seite des Verbindungselements 12, 14 über dessen Außenseite zur gegenüberliegenden Seite. In der Draufsicht des Eckverbinders ist zu erkennen, dass sich die Nut 26 nach innen in Richtung der Anschlagfläche 24 erstreckt und etwa bis zur Mitte des Verbindungselements 12 (d.h. bis etwa zur Längsachse) geht. Bezüglich des jeweiligen Verbindungselements 12, 14 erstreckt sich die Nut 26 in Längsrichtung bis etwa zur Anschlagfläche 24.

Schließlich sind in der rechten Darstellung des Eckverbinders 16 in Fig. 1 noch Rastelemente 38 zu erkennen, die mit dem Abstandhalter 40 über einen Draht 37 rastend zusammenwirken, wobei der Draht 37 um das Verbindungselement 12, 14 geführt ist und beim Einstecken eines Abstandhalters mitgezogen wird. Es können beispielsweise in einer Wandung 42 des Abstandhalters 40 Vertiefungen vorgesehen sein, in die diese Rastelemente 38 einrasten können, wenn der Abstandhalter seine Endposition erreicht hat.

Insgesamt ist das Eckelement 16 so ausgebildet, dass es einen ästhetischen Übergang von einem Abstandhalter 40 zu dem anderen Abstandhalter erzielt. Das bedeutet, dass die Außenfläche 20 des Eckelements 16 im Bereich der Stirnflächen 22 etwa in einer Ebene mit der jeweiligen Außenfläche des Abstandhalters 40 liegt, so dass ein guter Übergang erreicht wird. Gleiches gilt im Übrigen auch für die Seitenflächen 18 des Eckelements 16, die wie aus der rechten Darstellung in Fig. 1 zu erkennen ist, in etwa an die Seitenflächen des Abstandhalters 40 angepasst sind. Darüber hinaus ist damit auch die Stirnfläche 22 etwa an die Stirnfläche 46 des Abstandhalters angepasst.

Es wird nun Bezug genommen auf die Fig. 3 und 4. Um den Eckverbinder im Bereich des Eckelements 16 dicht zu machen, ist eine Folie aus Metall auf die Seitenfläche 18, die Außenfläche 20 und die Stirnfläche 22 aufgeklebt. In Fig. 3 ist diese Folie schraffiert dargestellt und mit dem Bezugszeichen 32 gekennzeichnet. In Fig. 1, rechte Darstellung ist die Folie 32 im Bereich der Stirnfläche 22 ebenfalls schraffiert dargestellt. Die Folie erstreckt sich also nicht über die gesamte Seitenfläche. Allerdings ist durchaus vorstellbar, einen größeren oder auch kleineren Bereich der Seitenfläche 18 mit der Metallfolie 32 zu versehen.

In den beiden Nuten 26 ist ein Abdichtmaterial angebracht, das im vorliegenden Fall Butyl ist. Dieses Abdichtmaterial ist in Fig. 3 mit dem Bezugszeichen 30 gekennzeichnet. Es liegt in der Nut 26 und erstreckt sich bis zum oberen Rand der jeweiligen Stirnfläche 22.

Das Butyl 30 soll eine Abdichtung zwischen der Stirnfläche 22 und dem eingesteckten Abstandhalter 40 erzielen.

Wie sich auch Fig. 4 ergibt, schlägt die Stirnfläche 46 des Abstandhalters 40 beim Aufstecken auf das Verbindungselement 12 an der Anschlagfläche 24 an, wobei die Stirnfläche 46 dann noch einen Abstand zu der Stirnfläche 22 des Eckelements besitzt. Das in diesem Spalt liegende Butyl 30 wird beim Einstecken des Abstandhalters 40 zusammengequetscht und drückt sich nach außen, was mit dem Bezugszeichen 34 gekennzeichnet ist. Dieses Zusammenquetschen des Butyls 30 hat einerseits den Vorteil, dass eine äußerst gute Abdichtung nach innen im kritischen Bereich zwischen Eckelement 16 und Abstandhalter 40 erreicht wird. Andererseits geht diese Abdichtung auch bei wechselnden Temperaturen nicht verloren, da ausreichend viel Butylmaterial vorhanden ist. Selbst wenn der Spalt zwischen Stirnfläche 22 und Stirnfläche 46 sich temperaturbedingt etwas vergrößern sollte, verschlechtert sich die Abdichtung nicht, da das Butyl 30 einen Ausgleich schafft.

Schließlich ist noch darauf hinzuweisen, dass auch der Abstandhalter 40 in einem äußeren Bereich eine Folie aus Metall aufweist, die in Fig. 4 mit dem Bezugszeichen 48 gekennzeichnet ist. Diese Folie 48 dient ebenfalls zur Abdichtung nach innen.

Wie bereits eingangs erwähnt, dienen Abstandhalter 40 dazu, zwei Isolierglasscheiben auf Abstand zu halten und den dazwischen entstehenden Hohlraum gegen Eindringen von Luft bzw. Feuchtigkeit abzudichten. Bei dem in der Fig. 4 gezeigten Eckverbinder würden die beiden Isolierglasscheiben parallel zur Zeichenebene vor und hinter dem Eckverbinder parallel zu der Seitenfläche 18 angeordnet sein.

## Patentansprüche

1. Eckverbinder für Glasscheiben-Abstandhalter mit
- einem ersten und einem zweiten Verbindungselement, auf die jeweils ein Abstandhalter aufsteckbar ist, und
- einem Eckelement, das die beiden Verbindungselemente winklig verbindet, wobei das Eckelement zwei Seitenflächen, die den Glasscheiben zugewandt sind, zwei Stirnflächen, die dem jeweiligen Abstandhalter zugewandt sind und eine Außenfläche aufweist, und wobei in Bereich der stirnflächen Butyl vorgesehen ist,
**dadurch gekennzeichnet, dass**
eine Metallfolie auf der Außenfläche sowie zumindest teilweise auf den Seitenflächen und den Stirnflächen aufgebracht ist, und dass
das vorgesehene Butyl zwischen Metallfolie und eingestecktem Abstandhalter eine Abdichtung schafft.

2. Eckverbinder nach Anspruch 1, **dadurch gekennzeichnet, dass** am innenliegenden Bereich der Stirnflächen des Eckelements jeweils eine Anschlagfläche für den Abstandhalter vorgesehen ist, der erart ausgebildet ist, dass zwischen Stirnfläche und Abstandhalter im äußeren Bereich ein Spalt entsteht.

3. Eckverbinder nach Anspruch 2, **dadurch gekennzeichnet, dass** in diesem Spalt Butyl vorgesehen ist, wobei die Menge an Butyl so gewählt ist, dass bei aufgestecktem Abstandhalter Butyl zur Seite gequetscht wird.

4. Eckverbinder nach einem der vorhergehenden Ansprüche, **dadurch gekennzeichnet, dass** Verbindungselemente und Eckelement einstückig, vorzugsweise aus Kunststoff, ausgebildet sind.

5. Eckverbinder nach einem der vorhergehenden Ansprüche, **dadurch gekennzeichnet, dass** die Folie aufgeklebt ist.

6. Eckverbinder nach einem der vorhergehenden Ansprüche, **dadurch gekennzeichnet, dass** die Verbindungselemente jeweils zumindest ein Halteelement aufweisen, um den eingesteckten Abstandhalter zu halten.

7. Eckverbinder nach Anspruch 6, **dadurch gekennzeichnet, dass** das Haltelement als Rastelement ausgebildet ist.

## Claims

1. A corner connector for glass pane spacers comprising
- a first and a second connecting element, on each of which a spacer can be mounted, and
- a corner element, which joins the two connecting elements at an angle, wherein the corner element has two lateral surfaces facing the glass panes, two end surfaces facing the respective spacer and an outer surface, and wherein butyl is provided in the area of the end surfaces
**characterized in that**
a metal foil is applied to the outer surface and at least partially to the lateral surfaces and the end surfaces, and
the provided butyl creates a seal between the metal foil and the inserted spacer.

2. The corner connector as claimed in claim 1, **characterized in that** on each inner area of the end surfaces of the corner element there is provided a stop surface for the spacer, formed in such a way that a gap between the end surface and the spacer is produced in the outer area.

3. The corner connector as claimed in claim 2, **characterized in that** butyl is provided in this gap, the amount of butyl being chosen such that, when the spacer is mounted, the butyl is squeezed to the side.

4. The corner connector as claimed in one of the preceding claims, **characterized in that** the connecting elements and the corner element are formed in one piece, preferably from plastic.

5. The corner connector as claimed in one of the preceding claims, **characterized in that** the foil is adhesively attached.

6. The corner connector as claimed in one of the preceding claims, **characterized in that** the connecting elements each have at least one holding element, in order to hold the inserted spacer.

7. The corner connector as claimed in claim 6, **characterized in that** the holding element is formed as a latching element.

## Revendications

1. Connecteur angulaire pour écarteur de vitres, avec
- un premier et un deuxième éléments de connexion, sur lesquels un écarteur peut chaque fois être engagé, et
- un élément angulaire, qui connecte angulairement les deux éléments de connexion, dans lequel l'élément angulaire présente deux faces latérales, qui sont orientées vers les vitres, deux faces frontales, qui sont orientées vers l'écarteur respectif, et une face extérieure, et dans lequel il est prévu du butyle dans la région des faces frontales,
**caractérisé en ce qu'**une feuille de métal est appliquée sur la face extérieure ainsi qu'au moins en partie sur les faces latérales et les faces frontales, et **en ce que** le butyle prévu forme un joint d'étanchéité entre la feuille de métal et l'écarteur inséré.

2. Connecteur angulaire selon la revendication 1, **caractérisé en ce qu'**il est chaque fois prévu sur la région interne des faces frontales de l'élément angulaire une face de butée pour l'écarteur, qui est réalisée de telle manière qu'il existe dans la région externe une fente entre la face frontale et l'écarteur.

3. Connecteur angulaire selon la revendication 2, **caractérisé en ce qu'**il est prévu du butyle dans cette fente, dans lequel la quantité de butyle est choisie de telle manière que du butyle soit expulsé vers le côté lorsque l'écarteur est posé.

4. Connecteur angulaire selon l'une quelconque des revendications précédentes, **caractérisé en ce que** les éléments de connexion et l'élément angulaire sont réalisés d'une seule pièce, de préférence en matière plastique.

5. Connecteur angulaire selon l'une quelconque des revendications précédentes, **caractérisé en ce que** la feuille est collée.

6. Connecteur angulaire selon l'une quelconque des revendications précédentes, **caractérisé en ce que** les éléments de connexion présentent chacun au moins un élément de maintien, pour maintenir l'écarteur inséré.

7. Connecteur angulaire selon la revendication 6, **caractérisé en ce que** l'élément de maintien se présente sous la forme d'un élément encliquetable.
